# EUROPEAN PATENT SPECIFICATION

(11) **EP 2 942 310 B1**
(45) Date of publication and mention of the grant of the patent: **05.06.2019**
(21) Application number: 12890767.2
(22) Date of filing: 28.12.2012
(51) Int. Cl.: B29C 73/16, B65D 83/44, B65D 83/70

(54) **AIR PRESSURE TYPE TYRE REPAIR GLUE BOTTLE**
LEIMFLASCHE ZUR REPARATUR VON LUFTDRUCKREIFEN
BOUTEILLE DE COLLE POUR LA RÉPARATION D'UN PNEUMATIQUE DU TYPE À PRESSION D'AIR

(43) Date of publication of application: 11.11.2015
(73) Proprietor: Active Tools International (HK) Ltd., Causeway Bay Hong Kong (CN)
(72) Inventor: HONG, Ying Chi, Causeway Bay Hong Kong (CN)
(74) Representative: Walker, Ross Thomson
(86) International application number: PCT/CN2012/087882
(87) International publication number: WO 2014/101131

(56) References cited:
- EP-A2- 1 997 611
- CN-A- 1 956 838
- CN-U- 201 483 775
- CN-U- 202 623 313
- CN-U- 202 624 979
- CN-U- 202 624 979
- CN-Y- 2 396 252
- DE-A1- 19 545 935
- US-A1- 2008 098 855

## Description

### FIELD OF THE INVENTION

This invention relates to a sealant bottle for tire repair, and more specifically to a sealant bottle for tire repair of gas pressure type.

### BACKGROUND OF THE INVENTION

In the prior art, the air produced by an air compressor is usually employed for pressing the sealant within a sealant bottle into a tire during the process of tire repair. Afterwards, by means of slow forward movement of the automobile, the sealant pressed thereinto can cover an inner wall of the tire uniformly for achieving the tire repair. Accordingly, such process for tire repair is simple in operation. However, a valve plug of the tire which is connected with the sealant bottle may be blocked, or a sealant outlet at a bottle cap of the sealant bottle may not be opened smoothly under the action of air during this process. In this case, the pressure within the sealant bottle will build up increasingly and thus a danger of explosion may be caused.

CN 202 624 979 U discloses a sealant bottle according to the preamble of claim 1.

### SUMMARY OF THE INVENTION

Aiming at the drawbacks that the pressure within the sealant bottle is too large and an explosion may take place due to the blocked valve plug and the closed sealant outlet in the prior art, the technical problem to be solved in this invention is to provide a sealant bottle for tire repair of gas pressure type which can lower down the high pressure within the sealant bottle automatically and ensure the safety during its usage.

The technical solution adopted to solve its technical problems in this invention is shown in claim 1.

In the above-mentioned sealant bottle for tire repair of gas pressure type, the explosion proof element comprises a rear housing, a front housing connected with the rear housing and a tapered piston in flexible connection with the rear housing. An air releasing hole is disposed at an end of the rear housing and a spring is disposed within the front housing. Herein, one end of the spring is placed in a cavity which is located inside the front housing and is matched with the shape of the spring, while its other end is sleeved with an end cylinder on the tapered piston. A lock washer provided with an air discharging slot is fixedly mounted between the rear housing and the front housing.

In the above-mentioned sealant bottle for tire repair of gas pressure type, the explosion proof element is located at the air-inlet end of the air throat.

In the above-mentioned sealant bottle for tire repair of gas pressure type, a neck tube with an external thread is disposed at the sealant outlet of the bottle body. The bottle cap is provided with a holding cavity of which the inner wall is disposed with an internal thread adapted with the external thread. The first pipe section is disposed within the holding cavity, and a sealing gasket is provided between the neck tube and a top surface of the holding cavity. The tail end of the first pipe section extends to a top part of the holding cavity and the second pipe section is disposed within the top part of the holding cavity.

In the above-mentioned sealant bottle for tire repair of gas pressure type, the straight pipe assembly comprises a straight pipe connector, a first straight pipe and a second straight pipe that are connected with each other sequentially. An air sealing ring for straight pipe is provided between the straight pipe connector and the first straight pipe, and a gasket for straight pipe which is configured to prevent the sealant within the bottle body from leakage is provided at the connection point between the first and the second straight pipes.

In the above-mentioned sealant bottle for tire repair of gas pressure type, both the gasket for straight pipe and the air sealing ring for straight pipe are O-shaped rings.

In the above-mentioned sealant bottle for tire repair of gas pressure type, a sponge for straight pipe is further disposed within the first straight pipe, wherein the sponge for straight pipe is configured to prevent the sealant from flowing to the air throat when the sealant bottle for tire repair of gas pressure type is inverted.

In the above-mentioned sealant bottle for tire repair of gas pressure type, the straight pipe connector is connected with the air inlet by way of clamping, and some sealing sealant is encapsulated within a gap between the straight pipe connector and the air inlet.

In the above-mentioned sealant bottle for tire repair of gas pressure type, the straight pipe connector is in screwed connection with the air throat, and a sealing gasket is disposed between the straight pipe connector and the air throat.

In the above-mentioned sealant bottle for tire repair of gas pressure type, an end of the sealant throat that has no connection with the bottle cap is disposed with a tire connection nozzle.

When implementing the sealant bottle for tire repair of gas pressure type in this invention, the following advantageous effect may be achieved: in this invention, the explosion proof element is disposed on the air throat. Accordingly, during the process of tire repair, the air can flow out through the air releasing hole on the explosion proof element so as to reduce the high pressure within the sealant bottle and thus ensure the safety during the tire repair when the pressure within the sealant bottle is too high. Besides, the rubber plug can move in the first pipe section following the pressure within the bottle body by the adoption of the bottle cap with the sealant guiding pipe as well as the step and the rubber plug arranged in the first pipe section of the sealant guiding pipe. In this way, not only the sealant is supplied to the breakage of the tire through changing the gas pressure within the bottle body, but also the sealant leakage and the damage to sealant bottle are avoided in the event of fluctuating pressure within the bottle body. The sealant bottle for tire repair in this invention is simple in structure and low in cost. Besides, it can effectively lower down the pressure within the sealant bottle, ensure the safety during its usage and bring convenience for storage.

### BRIEF DESCRIPTION OF THE DRAWINGS

Below this invention will be further explained in detail with reference to accompanying drawings and specific embodiments. In the figures:
Figure 1 is a schematic diagram illustrating the connection of the sealant bottle for tire repair of gas pressure type during its usage;
Figure 2 is an exploded structural diagram for the sealant bottle for tire repair of gas pressure type according to an embodiment of this invention;
Figure 3 is an exploded structural diagram for the straight pipe assembly of the sealant bottle for tire repair of gas pressure type according to an embodiment of this invention;
Figure 4 is an exploded structural diagram for the explosion proof element according to an embodiment of this invention;
Figure 5A is a sectional view illustrating the explosion proof element when its air releasing hole is closed according to an embodiment of this invention;
Figure 5B is a sectional view illustrating the explosion proof element when its air releasing hole is opened according to an embodiment of this invention;
Figure 6 is a cross-sectional view for the sealant bottle for tire repair of gas pressure type according to an embodiment of this invention;
Figure 7 is an enlarged view of A in Figure 6;
Figure 8A illustrating the sealant bottle for tire repair of gas pressure type when the rubber plug inside the bottle cap is located at position a at normal temperature and pressure in an embodiment of this invention;
Figure 8B illustrating the sealant bottle for tire repair of gas pressure type when the rubber plug inside the bottle cap is located at position b in the case of being expanded with heat in an embodiment of this invention;
Figure 8C illustrating the sealant bottle for tire repair of gas pressure type when the rubber plug inside the bottle cap is located at position c in the case of being introduced with some compressed air in an embodiment of this invention.

### DETAILED DESCRIPTION OF THE PREFERRED EMBODIMENT

The forward and backward orientations in this invention are defined as follows: when an air compressor is used to supply some air into the sealant bottle for tire repair, the orientation of the air compressor refers to the backward orientation, while the orientation of the sealant bottle refers to the forward one.

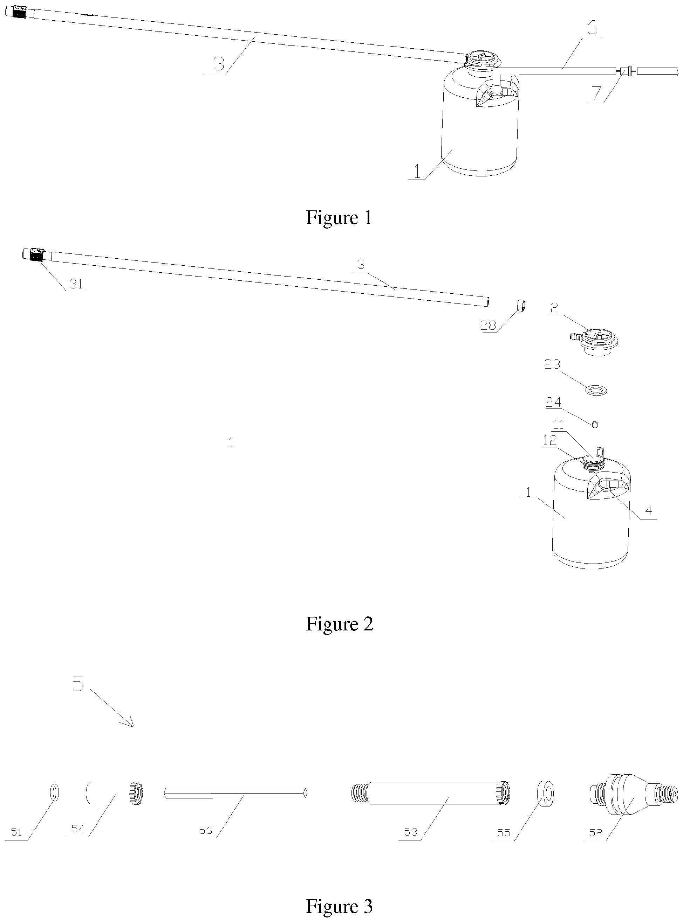

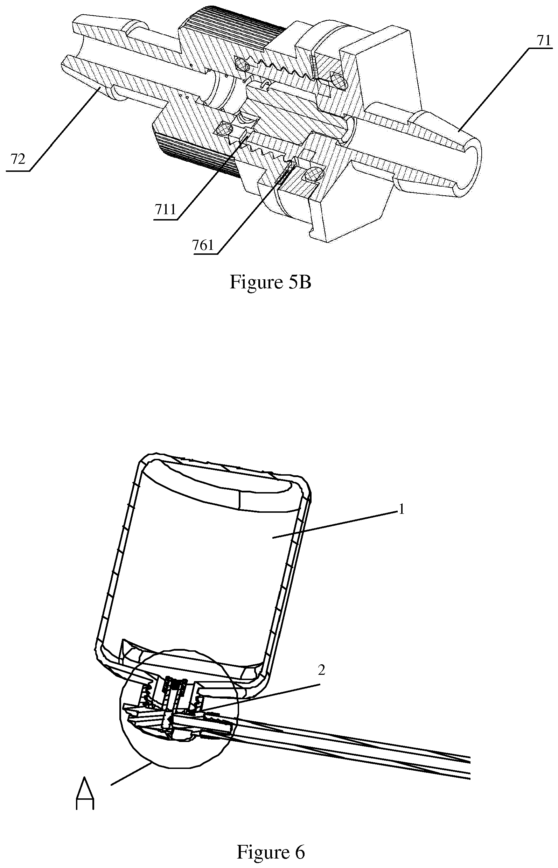

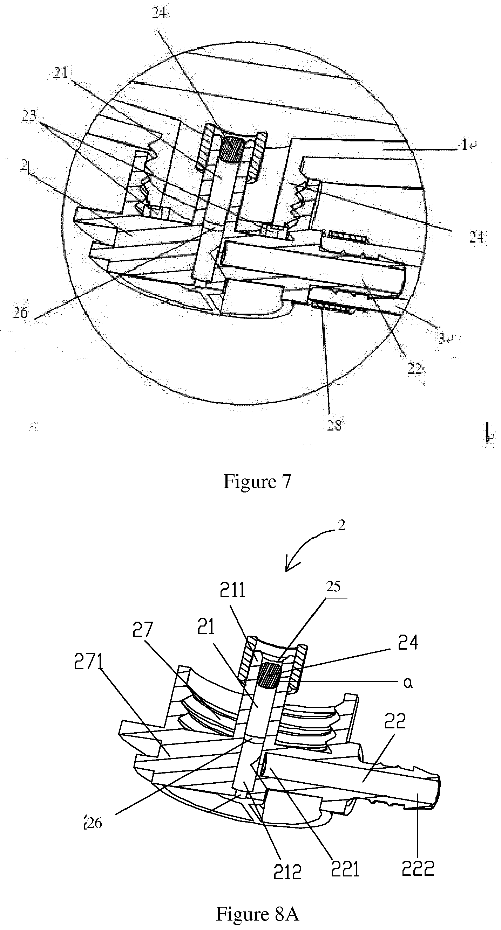

As shown in Figures 1-8C, a sealant bottle for tire repair of gas pressure type is provided in this invention. It comprises a bottle body 1 provided with a sealant outlet 11 and an air inlet 4. Herein, a bottle cap 2 is disposed at the sealant outlet 12 and the air inlet 12 is connected with a straight pipe assembly 5 which is inserted into the bottle body 1 and configured to transfer some air into the bottle body 1. An air-inlet end of the straight pipe assembly 5 is connected with an air throat 6 for transferring the air into the straight pipe assembly 5, wherein the air throat 6 is further provided with an explosion proof element 7 configured for preventing the bottle body 1 from explosion. A sealant guiding pipe is disposed within the bottle cap 2. It is comprised of a first pipe section 21 arranging along the axial direction of the bottle body 1 and a second pipe section 22 perpendicular to the first pipe section 21. The tail end 222 of the second pipe section 22 is connected to a sealant throat 3 so that the sealant within the bottle body is guided to the tire. A first step 25 is disposed at an inlet 211 of the first pipe section 21, and a second step 26 is disposed on the pipe wall between inlets 211 and 212 of the first pipe section 21 and the second pipe section 22. A rubber plug 26 is further disposed between the inlet 211 of the first pipe section 21 and the second step 26, and the first and second pipe sections 21 and 22 are connected to each other between the second step 26 and a tail end 212 of the first pipe section 21.

Based on the above-mentioned structure, the air throat 6, the straight pipe assembly 5, the bottle cap 2 (especially the sealant guiding pipe within the bottle cap 2) and the sealant throat 3 form a passage under the action of the air produced by the air compressor. In this case, the sealant within the bottle body 1 flows to the tire through the bottle cap 2 and the sealant throat 3. Meanwhile, some air can further be supplied into the tire through such passage when all the sealant is used up. In addition, the explosion proof element 7 on the air throat 6 can be connected to the surrounding atmosphere automatically when the pressure within the bottle body 1 is too high, thus lowering down the high pressure within the bottle body 1.

Referring to Figure 3, the straight pipe assembly 5 in this invention is comprised of a straight pipe connector 52, a first straight pipe 53 and a second straight pipe 54 that are connected with each other sequentially. Herein, the straight pipe connector 52 is the air-inlet end of the straight pipe assembly 5. A gasket for straight pipe 51 is located at an open end of the second straight pipe 54, i.e. the air-outlet end of the straight pipe assembly 5. In order to guarantee the air impermeability of the straight pipe assembly 5, an air sealing ring for straight pipe 55 is fixedly arranged between the straight pipe connector 52 and the first straight pipe 53 that are in screwed connection with each other; meanwhile, a gasket for straight pipe 51 is disposed at the connection point between the first and second straight pipes 53 and 54 so as to prevent the sealant within the bottle body 1 from leakage. Both the gasket for straight pipe 51 and the air sealing ring for straight pipe 55 mentioned here are O-shaped rings. In another embodiment, a sponge for straight pipe 56 is arranged within the first straight pipe 53. In this regard, the air produced by the air compressor firstly passes through the sponge for straight pipe 56 and then enters the second straight pipe 54 after it goes into the straight pipe assembly 5. Accordingly, the sealant is prevented from flowing to the air throat when the sealant bottle for tire repair of gas pressure type is inverted by adoption of the sponge for straight pipe 56.

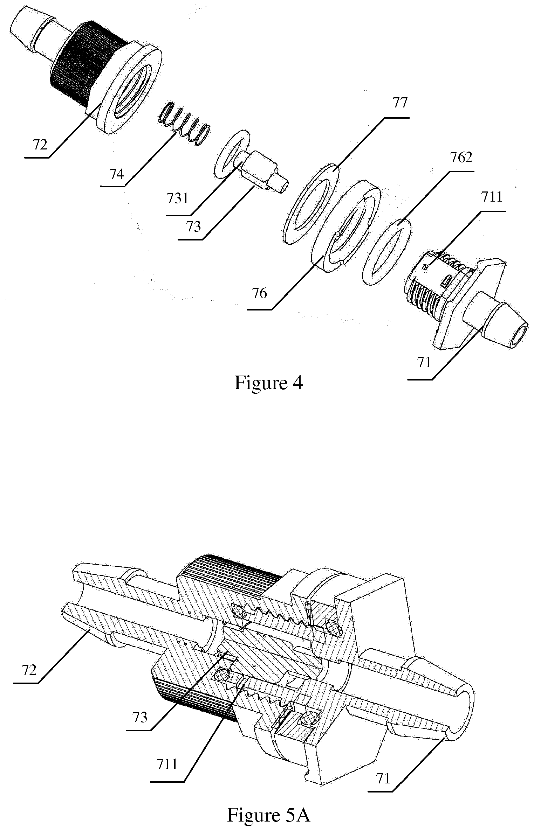

The explosion proof element 7 arranged on the air throat 6 is the key structure for guaranteeing the safety usage of the sealant bottle for tire repair in this invention. In Figures 4-5B, the explosion proof element 7 comprises a rear housing 71, a front housing 72 connected with the rear housing 71 and a tapered piston 73 in flexible connection with the rear housing 71. An air releasing hole 711 is disposed at an end of the rear housing 71, and a spring 74 is disposed within the front housing 72. Moreover, one end of the spring 74 is placed in a cavity which is located inside the front housing 72 and is matched with the shape of the spring 74, and its other end is sleeved with an end cylinder 731 on the tapered piston 73. A lock washer 76 provided with an air discharging slot 761 is fixedly mounted between the rear housing 71 and the front housing 73. Wherein, the lock washer 76 is integrally arranged with the rear housing 71. In addition, the lock washer 76 is also provided with an annular groove, wherein an O-shaped sealing ring 762 is disposed within the annular groove. After finishing assembling the explosion proof element 7, a sealing gasket 77 is further disposed between the front housing 72 and the lock washer 76 so that the two are sealed with each other. In this way, only a gap for the air discharging slot 761 is left between the two for air exhaust. The specific processes of the explosion proof element 7 for realizing the air inflation and the air exhaust are described briefly in the following: when the air compressor runs, the tapered piston 73 moves toward the front housing 72 to compress the spring 74 under the action of air pressure, and thus the air releasing hole 711 is blocked by the tapered piston 73. In this circumstance, air can enter a pressure reducing valve and finally enter the bottle body 1 through a groove on the surface of the tapered piston 73 after passing through the rear housing 71. Also, at this moment, only a slight amount of air is discharged from the air releasing hole 711. Instead, when the pressure within the bottle body 1 is too large, the spring 74 presses against the tapered piston 73 to make it move towards the rear housing 71 until the air releasing hole 711 is no longer blocked. At this moment, some air can be discharged by the air releasing hole 711 after passing through the air discharging slot 761 on the lock washer 76.

The specific position of the explosion proof element 7 in the air throat 6 is not limited here, and its installation position also has no influence on its implementation effect. In another implementation, the explosion proof element 7 is in proximity to the connection point of the air throat 6 and the air-inlet end of the straight pipe assembly. Of course, the explosion proof element 7 can also be located at the middle part of the air throat 6. The operation process and operation principle for the explosion proof element 7 at different locations are the same as each other, and thus they will not be repeatedly described here.

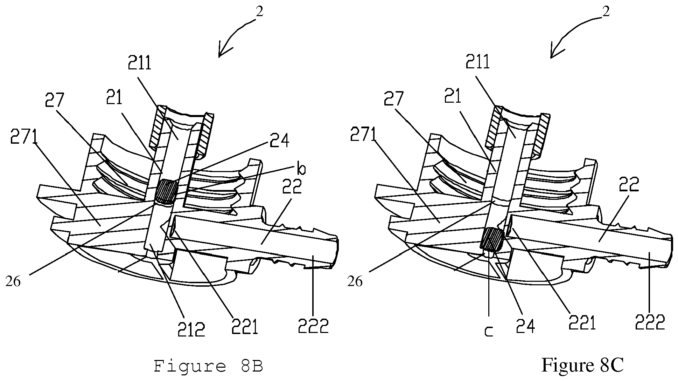

In this invention, the rubber plug 24 can move in the first pipe section 21 according to the pressure change within the bottle body 1 so that the sealant outlet is blocked or opened as required. As shown in Figure 8A, the rubber plug 24 is located between an inlet 211 of the first pipe section 21 and the second step 26 (i.e. position a) at normal temperature and pressure. In this case, the rubber plug 24 blocks the sealant outlet and the sealant within the bottle body 1 is prevented from flowing outwards. As shown in Figure 8C, the pressure within the bottle body 1 suddenly increases once the air compressor works. Herein, the rubber plug 24 thus moves to a position between the tail end 212 of the first pipe section 21 and the connection point of the first and second pipe sections 21 and 22 (i.e. position c). At this moment, a passage is formed for the first and second pipe sections 21 and 22, and thus the sealant can flow to a breakage of the tire from the bottle body 1 by passing through the sealant guiding pipe and the sealant throat 3. In this way, some sealant can be supplied to the breakage of the tire for tire repair by changing the pressure within the bottle body 1. It can be seen that such operation process is simple and convenient for promotion.

In addition, a first step 25 is disposed at the inlet 211 of the first pipe section 21, and the second step 25 is disposed between such inlet 211 and the inlet 221 of the second pipe section 22. As a result, although the rubber plug 24 can move inside the first pipe section 21 when the temperature within the bottle body 1 rises and the sealant expands due to surrounding environmental change, its movement is eventually limited by the arrangement of the second step 26. That is, the rubber plug can move from the inlet 211 of the first pipe section 21 to the second step 26 to the largest extent (i.e. position b), and it is finally blocked at the second step 26 (as shown in Figure 8b). On the other hand, instead of moving into the bottle body and further causing sealant leakage under the external pressure, the rubber plug 24 is blocked at the first step 25 when the temperature within the bottle body 1 falls and the sealant shrinks due to surrounding environmental change. Accordingly, the first and second steps 25 and 26 are configured for ensuring that any leakage or any other damage caused by temperature change of surrounding environment is prevented from the sealant bottle even when the sealant bottle containing the sealant is stored in any extreme environment.

As shown in Figures 2 and 7, a neck tube 12 with an external thread is further disposed at the opening of the bottle body 1. The bottle cap 2 is provided with a holding cavity 27 of which the inner wall is disposed with an internal thread adapted with the external thread. The first pipe section 21 is disposed within the holding cavity 27, and a sealing gasket 23 which is tightly pressed by the end of the neck tube 12 is provided between the neck tube 12 and a top surface of the holding cavity 27. As a result of the sealing gasket, it can be avoided that some sealant flows from the connection gap between the bottle body 1 and the bottle cap 2. The tail end 212 of the first pipe section 21 extends to the top part of the holding cavity 27 and the second pipe section 22 is inserted into the top part 271 of the holding cavity 27. Wherein, the top surface and the top part refer to the corresponding portion between the holding cavity 27 and the bottle cap 2.

In this invention, as mentioned above, the operation principle of the sealant bottle for tire repair of gas pressure type is as follows:
State 1: such sealant bottle for tire repair of gas pressure type is installed in the air compressor in an inverted way when the air compressor has not been working before the tire repair. The air-outlet end of the straight pipe assembly 5 is blocked by the gasket for straight pipe 5 right now so that it is ensured the sealant within the bottle body 1 is prevented from flowing out of the straight pipe assembly. Moreover, the rubber plug 24 arranged in the bottle cap is located at the opening of the first pipe section 21 in such a way that the sealant within the bottle body 1 is prevented from flowing to the sealant throat 3 through the bottle cap.
State 2: During the process of normal tire repair, the sealant throat 3 is connected with the valve plug of the tire to be repaired. The air compressor starts to work now and the air releasing hole 711 of the explosion proof element 7 is otherwise blocked. As a result, the air produced from the air compressor firstly enters the straight pipe assembly 5 through the air throat 6 and further bursts through the gasket for straight pipe 51 at the air-outlet end therein. Thereafter, the pressure within the bottle body 1 increases continuously which makes the rubber plug 24 within the bottle cap 2 move to the end portion of the first pipe section 21. The sealant within the bottle body 1 thus flows into the tire by passing through the sealant guiding pipe in the bottle cap 2 and the sealant throat 3 sequentially. Meanwhile, the tire is inflated to a certain pressure through such passage.
State 3: In the event of abnormal condition during tire repair, in specific, if the valve plug of the tire is blocked or the rubber plug 24 cannot be forced to move within the bottle cap, too large pressure is caused in the bottle body 1 since the air produced by the air compressor enters the bottle body 1 constantly. In this invention, however, the air releasing hole 711 of the explosion proof element 7 is no longer blocked right now, and the air can be discharged from the air discharging slot 76 on the lock washer 76 after passing through the air releasing hole 711 which functions as lowering down the pressure within the bottle body 1.
State 4: the sealant throat 3 is removed from the valve plug of the tire when finishing the tire repair (or when interrupting the tire repair owing to abnormal condition). At this moment, the tire repair operation is ended or interrupted.

It is mentioned that there may be another abnormal condition in state 3. That is, after the air compressor starts to work, the air produced therefrom cannot burst through the gasket for straight pipe 51 at the air-outlet end of the straight pipe assembly. Although the pressure within the bottle body 1 is free of any influence, high pressure is yet caused between the straight pipe assembly and the air throat 6. In this invention, the air releasing hole 711 of the explosion proof element 7 is no longer blocked in this case, and the air can be discharged from the air discharging slot 76 on the lock washer 76 after passing through the air releasing hole 711 which functions as avoiding any danger that may be caused by the high pressure within the straight pipe assembly and the air throat 6.

High requirement on the air impermeability is made to the whole apparatus of this invention due to its design of gas pressure type. In order to improve the air impermeability of such apparatus, the following configurations are adopted: (1) some sealing sealant is encapsulated in the gap formed when the straight pipe connector 52 is connected in the air inlet 4 by way of clamping; (2) a sealing gasket is further arranged between the straight pipe connector 52 and the air throat 6 when the two is in screwed connection with each other; and (3) air sealing ring for straight pipe 55 is arranged between the straight pipe connector 52 and the first straight pipe 53.

On the other hand, high requirement on the air impermeability is also made to the bottle cap 2 of the sealant bottle in this invention since this sealant bottle for tire repair of gas pressure type is installed in the air compressor in an inverted way. Specifically, the following configurations are included herein : (1) a sealing gasket 23 is arranged between the neck tube 12 and the top surface of the holding cavity 27; and (2) the rubber plug 24 is adopted to increase the impermeability of the sealant guiding pipe in the bottle cap 2.

Moreover, a locking ring 28 is disposed at the connection point between the sealant guiding pipe and the sealant throat 3. One end of the sealant throat 3 is clamped by the locking ring 28 to achieve a fixed connection with the bottle cap 2. The design of locking ring 28 contributes to increasing the impermeability of the connection between the bottle cap 2 and the sealant throat 3 in such a way that the sealant is prevented from leakage by the gap between the two. Herein, the other end of the sealant throat 3 (i.e. the end located away from the bottle cap 2) is provided with a tire connection nozzle 31 so as to be connected with the tire to be repaired.

In conclusion, the sealant can flow into the tire to achieve the tire repair under the action of air during the process of tire repair on one hand by adoption of the sealant bottle for tire repair of gas pressure type in this invention. On the other hand, when the pressure within the bottle body of the sealant bottle is too large, the explosion proof element can be connected to the surrounding atmosphere which thus lowers down the high pressure within the bottle body effectively and ensures the safety usage for the sealant bottle. Moreover, the impermeability of this invention is excellent in which case any problems such as low efficiency in tire repair caused by sealant leakage or air leakage are hold back.

All mentioned above are only the preferred embodiments of this invention, which are not intended to limit this invention. Any modifications, equivalents or improvements made within the spirit and principle of this invention should be included in the protection scope of this invention.

## Claims

1. A sealant bottle for tire repair of gas pressure type, comprising a bottle body (1) configured for containing sealant; the bottle body (1) is provided with a sealant outlet and an air inlet (4), wherein a bottle cap (2) is disposed at the sealant outlet and the air inlet (4) communicates with an air throat (6), and the air throat (6) is further provided with an explosion proof element (7) configured for preventing the bottle body (1) from explosion;
a sealant guiding pipe is disposed within the bottle cap (2); the sealant guiding pipe is comprised of a first pipe section (21) arranging along the axial direction of the bottle body (1) as well as a second pipe section (22) perpendicular to the first pipe section (21) and connected to a sealant throat (3); a first step (25) is disposed at an inlet (211) of the first pipe section (21), a second step (26) is disposed on the pipe wall between the inlet (211) of the first pipe section (21) and an inlet (221) of the second pipe section (22), and a rubber plug (26) is further disposed between the inlet (211) of the first pipe section (21) and the second step (26); the first and second pipe sections (21, 22) are connected to each other between the second step (26) and a tail end (212) of the first pipe section (21); and
**characterized in that** the air inlet (4) is connected with a straight pipe assembly (5), which is inserted into the bottle body (1) and configured to transfer some air into the bottle body (1), and wherein an air-inlet end of the straight pipe assembly (5) is connected with the air throat (6) for transferring the air into the straight pipe assembly (5);
the straight pipe assembly (5) comprises a straight pipe connector (52), a first straight pipe (53) and a second straight pipe (54) that are connected with each other sequentially; an air sealing ring for straight pipe (55) is provided between the straight pipe connector (52) and the first straight pipe (53), and a gasket for straight pipe (51) which is configured to prevent the sealant within the bottle body (1) from leakage is provided at the connection point between the first and the second straight pipes (53, 54); and
wherein a sponge for straight pipe (56) is further disposed within the first straight pipe (53), wherein the sponge for straight pipe (56) is configured to prevent the sealant from flowing to the air throat (6) when the sealant bottle for tire repair of gas pressure type is inverted.

2. The sealant bottle for tire repair of gas pressure type according to claim 1, wherein the explosion proof element (7) comprises a rear housing (71), a front housing (72) connected with the rear housing (71) and a tapered piston (73) in flexible connection with the rear housing (71); an air releasing hole (711) is disposed at an end of the rear housing (71) and a spring (74) is disposed within the front housing (72); wherein one end of the spring (74) is placed in a cavity which is located inside the front housing (72) and is matched with the shape of the spring (74), while its other end is sleeved with an end cylinder (731) on the tapered piston (73); a lock washer (76) provided with an air discharging slot (761) is fixedly mounted between the rear housing (71) and the front housing (72).

3. The sealant bottle for tire repair of gas pressure type according to claim 1 or 2, wherein the explosion proof element (7) is located at the air-inlet end of the air throat (6).

4. The sealant bottle for tire repair of gas pressure type according to claim 1 or 2, wherein a neck tube (12) with an external thread is disposed at the sealant outlet of the bottle body (1); the bottle cap (2) is provided with a holding cavity (27) of which the inner wall is disposed with an internal thread adapted with the external thread;
the first pipe section (21) is disposed within the holding cavity (27), and a sealing gasket (23) is provided between the neck tube (12) and a top surface of the holding cavity (27);
the tail end (212) of the first pipe section (21) extends to a top part (271) of the holding cavity (27) and the second pipe section (22) is disposed within the top part (271) of the holding cavity (27).

5. The sealant bottle for tire repair of gas pressure type according to claim 1, wherein both the gasket for straight pipe (51) and the air sealing ring for straight pipe (55) are O-shaped rings.

6. The sealant bottle for tire repair of gas pressure type according to claim 1, wherein the straight pipe connector (52) is connected with the air inlet (4) by way of clamping, and some sealing sealant is encapsulated within a gap between the straight pipe connector (52) and the air inlet (4).

7. The sealant bottle for tire repair of gas pressure type according to claim 1, wherein the straight pipe connector (52) is in screwed connection with the air throat (6), and a sealing gasket is disposed between the straight pipe connector (52) and the air throat (6).

8. The sealant bottle for tire repair of gas pressure type according to claim 1, wherein an end of the sealant throat (3) that has no connection with the bottle cap (2) is disposed with a tire connection nozzle (31).

## Patentansprüche

1. Dichtungsmittel-Gasdruckflasche zur Reifenreparatur, die einen Flaschenkörper (1) umfasst, der zur Aufnahme eines Dichtungsmittels konfiguriert ist; wobei der Flaschenkörper (1) mit einem Dichtungsmittelauslass und einem Lufteinlass (4) versehen ist, wobei ein Flaschenverschluss (2) am Dichtungsmittelauslass angeordnet ist und der Lufteinlass (4) mit einer Luftkehle (6) in Verbindung steht, und die Luftkehle (6) ferner mit einem Explosionsschutzelement (7) versehen ist, das so konfiguriert ist, dass es eine Explosion des Flaschenkörpers (1) verhindert;
eine Dichtungsmittelleitröhre innerhalb des Flaschenverschlusses (2) angeordnet ist; die Dichtungsmittelleitröhre aus einem ersten Röhrenabschnitt (21), der in der axialen Richtung des Flaschenkörpers (1) angeordnet ist, sowie einem zweiten Röhrenabschnitt (22) lotrecht zum ersten Röhrenabschnitt (21) besteht, der mit einer Dichtungsmittelkehle (3) verbunden ist; eine erste Stufe (25) an einem Einlass (211) des ersten Röhrenabschnitts (21) angeordnet ist, eine zweite Stufe (26) auf der Röhrenwand zwischen dem Einlass (211) des ersten Röhrenabschnitts (21) und einem Einlass (221) des zweiten Röhrenabschnitts (22) angeordnet ist, und ferner ein Gummistopfen (26) zwischen dem Einlass (211) des ersten Röhrenabschnitts (21) und der zweiten Stufe (26) angeordnet ist; der erste und der zweite Röhrenabschnitt (21, 22) zwischen der zweiten Stufe (26) und einem Schwanzende (212) des ersten Röhrenabschnitts (21) miteinander verbunden sind; und
**dadurch gekennzeichnet, dass** der Lufteinlass (4) mit einer geraden Röhrenanordnung (5) verbunden ist, die in den Flaschenkörper (1) eingesetzt und so konfiguriert ist, dass sie etwas Luft in den Flaschenkörper (1) überträgt, und wobei ein Lufteinlassende der geraden Röhrenanordnung (5) mit der Luftkehle (6) verbunden ist, um Luft in die gerade Röhrenanordnung (5) zu übertragen;
die gerade Röhrenanordnung (5) einen geraden Röhrenverbinder (52), eine erste gerade Röhre (53) und eine zweite gerade Röhre (54) umfasst, die der Reihe nach miteinander verbunden sind; ein Luftdichtungsring für die gerade Röhre (55) zwischen dem geraden Röhrenverbinder (52) und der ersten geraden Röhre (53) vorgesehen ist, und eine Dichtung für die gerade Röhre (51), die so konfiguriert ist, dass sie verhindert, dass das im Flaschenkörper (1) enthaltene Dichtungsmittel austritt, an der Verbindungsstelle zwischen der ersten und der zweiten geraden Röhre (53, 54) vorgesehen ist; und
wobei ein Schwamm für die gerade Röhre (56) ferner innerhalb der ersten geraden Röhre (53) angeordnet ist, wobei der Schwamm für die gerade Röhre (56) so konfiguriert ist, dass er verhindert, dass das Dichtungsmittel in die Luftkehle (6) fließt, wenn die Dichtungsmittel-Gasdruckflasche zur Reifenreparatur umgedreht wird.

2. Dichtungsmittel-Gasdruckflasche zur Reifenreparatur nach Anspruch 1, wobei das Explosionsschutzelement (7) ein hinteres Gehäuse (71), ein mit dem hinteren Gehäuse (71) verbundenes vorderes Gehäuse (72) und einen kegelförmigen Kolben (73) in flexibler Verbindung mit dem hinteren Gehäuse (71) umfasst; an einem Ende des hinteren Gehäuses (71) ein Entlüftungsloch (711) vorgesehen ist und eine Feder (74) innerhalb des vorderen Gehäuses (72) angeordnet ist; wobei ein Ende der Feder (74) in einem Hohlraum platziert ist, der sich im vorderen Gehäuse (72) befindet und an die Form der Feder (74) angepasst ist, während ihr anderes Ende mit einem Endzylinder (731) auf dem kegelförmigen Kolben (73) ummantelt ist; eine Sicherungsscheibe (76), die mit einem Luftaustrittsschlitz (761) versehen ist, fest zwischen dem hinteren Gehäuse (71) und dem vorderen Gehäuse (72) montiert ist.

3. Dichtungsmittel-Gasdruckflasche zur Reifenreparatur Anspruch 1 oder 2, wobei sich das Explosionsschutzelement (7) am Lufteinlassende der Luftkehle (6) befindet.

4. Dichtungsmittel-Gasdruckflasche zur Reifenreparatur nach Anspruch 1 oder 2, wobei am Dichtungsmittelauslass des Flaschenkörpers (1) eine Halsröhre (12) mit Außengewinde angeordnet ist; der Flaschenverschluss (2) mit einem Haltehohlraum (27) versehen ist, dessen Innenwand ein an das Außengewinde angepasstes Innengewinde aufweist;
der erste Röhrenabschnitt (21) innerhalb des Haltehohlraums (27) angeordnet ist und eine Dichtung (23) zwischen der Halsröhre (12) und einer Oberseite des Haltehohlraums (27) vorgesehen ist;
das Schwanzende (212) des ersten Rohrleitungsabschnitts (21) sich zu einem oberen Teil (271) des Haltehohlraums (27) erstreckt und der zweite Röhrenabschnitt (22) innerhalb des oberen Teils (271) des Haltehohlraums (27) angeordnet ist.

5. Dichtungsmittel-Gasdruckflasche zur Reifenreparatur nach Anspruch 1, wobei sowohl die Dichtung für die gerade Röhre (51) als auch der Luftdichtungsring für die gerade Röhre (55) O-förmige Ringe sind.

6. Dichtungsmittel-Gasdruckflasche zur Reifenreparatur nach Anspruch 1, wobei der gerade Röhrenverbinder (52) mit dem Lufteinlass (4) durch Festklemmen verbunden ist und etwas abdichtendes Dichtungsmittel in einem Spalt zwischen dem geraden Röhrenverbinder (52) und dem Lufteinlass (4) eingekapselt ist.

7. Dichtungsmittel-Gasdruckflasche zur Reifenreparatur nach Anspruch 1, wobei der gerade Röhrenverbinder (52) in Schraubverbindung mit der Luftkehle (6) steht und eine Dichtung zwischen dem geraden Röhrenverbinder (52) und der Luftkehle (6) angeordnet ist.

8. Dichtungsmittel-Gasdruckflasche zur Reifenreparatur nach Anspruch 1, wobei ein Ende der Dichtungsmittelkehle (3), das keine Verbindung mit dem Flaschenverschluss (2) aufweist, mit einer Reifenverbindungsdüse (31) versehen ist.

## Revendications

1. Flacon de produit d'étanchéité destiné à réparer les pneus de type à pression de gaz, comprenant un corps de flacon (1) configuré pour contenir un produit d'étanchéité ; le corps de flacon (1) est muni d'une sortie de produit d'étanchéité et d'une entrée d'air (4), dans lequel un bouchon de flacon (2) est disposé à la sortie de produit d'étanchéité et l'entrée d'air (4) communique avec un goulot d'air (6), et le goulot d'air (6) est muni en outre d'un élément antidéflagrant (7) configuré pour empêcher l'explosion du corps de flacon (1) ;
un tuyau de guidage du produit d'étanchéité est disposé dans le bouchon de flacon (2) ; le tuyau de guidage du produit d'étanchéité est composé d'une première section de tuyau (21) s'agençant le long de la direction axiale du corps de flacon (1) ainsi qu'une deuxième section de tuyau (22) perpendiculaire à la première section de tuyau (21) et raccordée à un goulot de produit d'étanchéité (3) ; une première étape (25) est disposée à une entrée (211) de la première section de tuyau (21), une deuxième étape (26) est disposée sur la paroi de tuyau entre l'entrée (211) de la première section de tuyau (21) et une entrée (221) de la deuxième section de tuyau (22), et un obturateur en caoutchouc (26) est disposé en outre entre l'entrée (211) de la première section de tuyau (21) et la deuxième étape (26) ; les première et deuxième sections de tuyau (21, 22) sont raccordées l'une avec l'autre entre la deuxième étape (26) et une extrémité de queue (212) de la première section de tuyau (21) ; et
**caractérisé en ce que** l'entrée d'air (4) est raccordée avec un ensemble tuyau droit (5), lequel est inséré dans le corps de flacon (1) et configuré pour transférer de l'air dans le corps de flacon (1), et dans lequel une extrémité d'entrée d'air de l'ensemble tuyau droit (5) est raccordée avec le goulot d'air (6) pour transférer l'air dans l'ensemble tuyau droit (5) ;
l'ensemble tuyau droit (5) comprend un raccord de tuyau droit (52), un premier tuyau droit (53) et un deuxième tuyau droit (54) qui sont raccordés l'un avec l'autre en séquence ; une bague d'étanchéité d'air pour tuyau droit (55) est fournie entre le raccord de tuyau droit (52) et le premier tuyau droit (53), et un joint d'étanchéité pour tuyau droit (51) qui est configuré pour empêcher la fuite du produit d'étanchéité qui est dans le corps de flacon (1) est fourni au point de raccordement entre le premier et le deuxième tuyaux droits (53, 54) ; et
dans lequel une éponge pour tuyau droit (56) est disposée en outre dans le premier tuyau droit (53), dans lequel l'éponge pour tuyau droit (56) est configurée pour empêcher le produit d'étanchéité de couler vers le goulot d'air (6) quand le flacon de produit d'étanchéité destiné à réparer les pneus de type à pression de gaz est inversé.

2. Flacon de produit d'étanchéité destiné à réparer les pneus de type à pression de gaz selon la revendication 1, dans lequel l'élément antidéflagrant (7) comprend un boîtier arrière (71), un boîtier avant (72) raccordé avec le boîtier arrière (71) et un piston conique (73) en raccordement flexible avec le boîtier arrière (71) ; un trou de libération d'air (711) est disposé à une extrémité du boîtier arrière (71) et un ressort (74) est disposé dans le boîtier avant (72) ; dans lequel une extrémité du ressort (74) est placée dans une cavité qui est située à l'intérieur du boîtier avant (72) et correspond à la forme du ressort (74), tandis que son autre extrémité est emmanchée avec un cylindre d'extrémité (731) sur le piston conique (73) ; une rondelle de blocage (76) munie d'une fente de décharge d'air (761) est montée de manière fixe entre le boîtier arrière (71) et le boîtier avant (72).

3. Flacon de produit d'étanchéité destiné à réparer les pneus de type à pression de gaz selon la revendication 1 ou 2, dans lequel l'élément antidéflagrant (7) est situé à l'extrémité d'entrée d'air du goulot d'air (6).

4. Flacon de produit d'étanchéité destiné à réparer les pneus de type à pression de gaz selon la revendication 1 ou 2, dans lequel un tube de col (12) ayant un filetage extérieur est disposé à la sortie du produit d'étanchéité du corps de flacon (1) ; le bouchon de flacon (2) est muni d'une cavité de maintien (27) dont la paroi intérieure est disposée avec un filetage intérieur adapté au filetage extérieur ;
la première section de tuyau (21) est disposée dans la cavité de maintien (27), et un joint d'étanchéité (23) est fourni entre le tube de col (12) et une surface supérieure de la cavité de maintien (27) ;
l'extrémité de queue (212) de la première section de tuyau (21) s'étend à une partie supérieure (271) de la cavité de maintien (27) et la deuxième section de tuyau (22) est disposée dans la partie supérieure (271) de la cavité de maintien (27).

5. Flacon de produit d'étanchéité destiné à réparer les pneus de type à pression de gaz selon la revendication 1, dans lequel à la fois le joint d'étanchéité pour tuyau droit (51) et la bague d'étanchéité d'air pour tuyau droit (55) sont des joints toriques.

6. Flacon de produit d'étanchéité destiné à réparer les pneus de type à pression de gaz selon la revendication 1, dans lequel le raccord de tuyau droit (52) est raccordé avec l'entrée d'air (4) par serrage, et une partie du produit d'étanchéité est encapsulé dans un espace entre le raccord de tuyau droit (52) et l'entrée d'air (4).

7. Flacon de produit d'étanchéité destiné à réparer les pneus de type à pression de gaz selon la revendication 1, dans lequel le raccord de tuyau droit (52) est en raccordement vissé avec le goulot d'air (6), et un joint d'étanchéité est disposé entre le raccord de tuyau droit (52) et le goulot d'air (6).

8. Flacon de produit d'étanchéité destiné à réparer les pneus de type à pression de gaz selon la revendication 1, dans lequel une extrémité du goulot de produit d'étanchéité (3) qui n'a pas de raccordement avec le bouchon de flacon (2) est disposé dans un embout de raccordement de pneu (31).
